(19) Europäisches Patentamt
European Patent Office
Office européen des brevets

(11) Veröffentlichungsnummer: **0 227 056**
**A2**

(12) **EUROPÄISCHE PATENTANMELDUNG**

(21) Anmeldenummer: **86117716.0**

(51) Int. Cl.4: **H01M 4/58** , H01M 10/40

(22) Anmeldetag: **19.12.86**

(30) Priorität: **23.12.85 DE 3545902**

(43) Veröffentlichungstag der Anmeldung:
**01.07.87 Patentblatt 87/27**

(84) Benannte Vertragsstaaten:
**BE DE FR GB NL**

(71) Anmelder: **BASF Aktiengesellschaft**
**Carl-Bosch-Strasse 38**
**D-6700 Ludwigshafen(DE)**

(72) Erfinder: **Müenstedt, Helmut, Dr.**
**An dem Altenbach 41**
**D-6706 Wachenheim(DE)**
Erfinder: **Gebhard, Helmut**
**Bismarckstrasse 9**
**D-6737 Boehl-Iggelheim(DE)**

(54) **Wiederaufladbare elektrochemische Zelle.**

(57) Elektrochemische Zelle mit einer Kathode, einer Anode und einem Elektrolyten, wobei die Zelle als aktives Anodenmaterial Kohlenstoffasern enthält.

EP 0 227 056 A2

# Wiederaufladbare elektrochemische Zelle

Die Erfindung betrifft elektrochemische Zellen mit einer Kathode und einer Anode und einem Elektrolyten. Außerdem betrifft die Erfindung aus solchen Zellen hergestellte Primär-und Sekundärelemente.

Es ist bekannt, daß Kohlenstoffmaterialien, z.B. Kohlenstoffasern chemisch und elektrochemisch reduziert werden können. So werden von J.O. Besenhard et al (Synth. Metals 4 (1981), 51-58) Intercalationsverbindungen aus Kalium und C-Fasern der allgemeinen Formel $KC_n$ beschrieben, die entweder chemisch in Lösung mit starken Reduktionsmitteln oder elektrochemisch durch kathodische Reduktion hergestellt werden können. Grundsätzlich können alle Alkalimetalle auf diese Weise in Kohlenstoffasern eingebaut werden.

Von den gleichen Autoren (Synth. Metals 4 (1982), 211-223) werden auch elektrochemische Anwendungen von Graphit-Intercalationsverbindungen beschrieben. Diese Anwendungen beschränken sich auf die Verwendung derartiger Verbindungen als Kathoden in Primär-und Sekundärbatterien und als reaktive Zwischenprodukte z.B. bei der elektrochemischen Reduktion von Propylencarbonat.

Eichinger (G. Eichinger, J. Electroanal. Chem. 74, (1976), 183-93) beschreibt ebenfalls Intercalationsverbindungen von Alkalimetallen in Graphit und berichtet, daß die Reversibilität der Ein-und Auslagerung des Alkalimetalls in Graphit weit unter 100 % liegt, und führt dies auf irreversible Zersetzungsreaktionen der Intercalationsverbindungen zurück.

In der Literatur ebenfalls beschrieben sind elektrochemische Zellen mit Kohlenstoffasern als Kathode und in der Regel Alkalimetallen, vorzugsweise Lithium, als Anode (z.B. in JA 60/112 258 und JA 60/25 152 (1985)).

Die Verwendung von Lithium als Anodenmaterial bringt jedoch einige Nachteile mit sich, die sich vor allem in wiederaufladbaren elektrochemischen Zellen, aber auch in Primärzellen nachteilig auswirken. Zum einen treten häufig Korrosionsprobleme auf, zum anderen wird die Elektrode während des Entladevorgangs zerstört, was besonders bei wiederaufladbaren Zellen nicht tragbar ist.

In den letzten Jahren haben besonders elektrochemische Zellen mit elektrisch leitfähigen Polymeren als Elektrodenmaterial steigendes Interesse erlangt. Derartige Systeme und daraus hergestellte Batterien sollten gegenüber herkömmlichen Batterien den Vorteil eines wesentlich niedrigeren Gewichts und, daraus folgend, eine hohe Energiedichte aufweisen.

In den EP-A-36118, 49970 und 50441 werden leichte elektrochemische Zellen beschrieben, die als aktives Elektrodenmaterial dotiertes Polyacetylen und als Gegenelektrode Lithium enthalten. Statt Polyacetylen kann beispielsweise auch Polypyrrol als Polymer verwendet werden. Diese Zellen leiden jedoch unter dem Nachteil, daß die Reversibilität der Elektrodenreaktion für die Lithiumelektrode nicht vollständig ist, so daß mit wachsender Cyclenzahl das Lithium der Gegenelektrode verbraucht wird, was zum Versagen der Zelle führt. Unter "Cyclenzahl" wird die Zahl der Be-und Entladungsvorgänge der Batterie verstanden.

Versuche, die vorstehenden Probleme durch Intercalation des Lithiums in Aluminium oder Indium zu lösen, waren aufgrund der Sprödigkeit der dabei erhaltenen Produkte und deren extremer Neigung zum Abbröckeln zum Scheitern verurteilt. Diese Instabilität der Matrix ist vermutlich auf die Aufweitung des Wirtsgitters bei der Intercalation des Lithiums zurückzuführen (vgl. J.O. Besenhard et al, J. Power Sources 14 (1985), 193-200).

Hinzu kommt, daß die Reversibilität der Li-Abscheidung auch in diesen Systemen nicht befriedigend ist.

Der vorliegenden Erfindung lag daher die Aufgabe zugrunde, elektrochemische Zellen mit einem geeigneten Anodenmaterial zur Verfügung zu stellen, das ausreichende Stabilität unter den Betriebsbedingungen aufweist. Insbesondere sollte das Material auch für wiederaufladbare elektrochemische Zellen geeignet sein.

Erfindungsgemäß wird diese Aufgabe durch elektrochemische Zellen mit einer Kathode, einer Anode und einem Elektrolyten gelöst, die dadurch gekennzeichnet sind, daß die Anode als aktives Elektrodenmaterial Kohlenstoffasern (im folgenden als C-Fasern bezeichnet) enthält.

Bevorzugte erfindungsgemäße elektrochemische Zellen sind den Unteransprüchen zu entnehmen. Die erfindungsgemäßen Zellen haben den Vorteil, daß die C-Fasern relativ inert gegen die gängigen Elektrolytlösungsmittel sind.

Ein weiterer wichtiger Vorteil der erfindungsgemäßen Zellen, der in Sekundärelementen zum Tragen kommt, liegt darin, daß die Reversibilität des Be-und Entladevorgangs der Kohlenstoffasern, d.h. die Reversibilität der Anodenreaktion so hoch ist, daß mehrere hundert Cyclen möglich sind, ohne daß ein signifikanter Abfall der Beladungshöhe feststellbar ist.

Grundsätzlich können als Kathode in den erfindungsgemäßen Zellen die üblicherweise in Primär-und Sekundärzellen verwendeten Materialien eingesetzt werden. Diese sind für Primärelemente in der Literatur eingehend beschrieben, so daß sich hier nähere Angaben erübrigen.

Auch Kathodenmaterialien für wiederaufladbare elektrochemische Zellen sind dem Fachmann an sich bekannt und in der Literatur beschrieben.

Da sich die Vorteile der Erfindung, wie bereits erwähnt, besonders in wiederaufladbaren elektrochemischen Zellen auswirken und weiterhin elektrisch leitfähige Polymere in den letzten Jahren steigendes Interesse als Elektrodenmaterialien gefunden haben, wird die Erfindung im folgenden anhand von wiederaufladbaren elektrochemischen Zellen mit elektrisch leitfähigen Polymeren als aktivem Kathodenmaterial beschrieben.

Es sei jedoch nochmals betont, daß die Erfindung grundsätzlich auch für Primär-und Sekundärelemente mit anderen Kathodenmaterialien geeignet ist.

Gemäß der nachstehend beschriebenen Ausführungsform enthält die erfindungsgemäße elektrochemische Zelle ein elektrochemisch reversibel oxidierbares Polymer als aktives Kathodenmaterial und als aktives Anodenmaterial werden Kohlenstoffasern eingesetzt. Beim Be-und Entladen der Zelle werden nun positive Ionen des Elektrolyten in die Kohlenstoffasern und negative Ionen des Elektrolyten in das Polymer ein-und ausgelagert. Diese Ein-und Auslagerung der Ionen ist vollkommen reversibel, d.h. es findet kein Verbrauch von aktivem Elektrodenmaterial oder Leitsalz statt, wie dies bei den aus dem Stand der Technik bekannten Zellen der Fall ist, in denen Lithium als Gegenelektrode zu elektrisch leitfähigen Polymeren verwendet wird.

Die erfindungsgemäßen elektrochemischen Zellen zeichnen sich durch eine hervorragende Langzeitstabilität aus, d.h. sie können mehrere hundert Male be-und entladen werden (cyclisiert werden), ohne daß die Beladungshöhe merklich abnimmt. Unter Beladungshöhe ist die Energie zu verstehen, die beim Cyclisieren der Zelle in diese eingebracht werden kann.

Die vollkommene Reversibilität der Ein-und Auslagerung der positiven Ionen in die Kohlenstoffasern ist überraschend, da im Falle der Kohlenstoffaser/Lithium-Zelle im Bereich zwischen 0,25 und 2,5 V cyclisiert wird, während dieser Bereich für die erfindungsgemäße Zelle ganz allgemein von 0,25 V bis zur Zersetzungsspannung des im Elektrolyten verwendeten Lösungsmittels reichen kann. Vorzugsweise wird in einem Spannungsbereich von 1 V als untere und der Zersetzungsspannung des verwendeten Elektrolytlösungsmittels als oberer Spannungsgrenze gearbeitet. Während gebräuchliche Elektrolytlösungsmittel im allgemeinen Zersetzungsspannungen von nicht wesentlich mehr als 4 V aufweisen, ist dies nicht als limitierender Wert für die obere Cyclisierungsspannung anzusehen, wenn geeignete Lösungsmittel mit höherer Zersetzungsspannung zugänglich sind.

Der Grad und die Reversibilität der Reduktion der Kohlenstoffasern sind so hoch, daß eine wiederaufladbare elektrochemische Zelle sehr hoher Energiedichte entsteht, wenn als aktives Material der Kathode ein elektrochemisch reversibel oxidierbares Polymer verwendet wird. Mehrere hundert Be-und Entladecyclen sind möglich, ohne daß sich Beladungshöhe und Energiedichte merklich ändern.

Sehr überraschend ist darüber hinaus der Befund, daß selbst dann noch eine hohe Beladungsdichte erreicht wird, wenn man als untere Spannungsgrenze für die Entladung statt der möglichen 0,25 V einen höheren Wert wählt. Diese Eigenschaft der erfindungsgemäßen Zellen hat zur Folge, daß bei hohen Energiedichten als Funktion des Ladungszustands nur geringe Spannungsänderungen auftreten, was besonders bei Anwendungen in Sekundärelementen von großem Vorteil ist.

Ein weiterer wichtiger Vorteil der erfindungsgemäßen elektrochemischen Zellen liegt darin, daß sich bei Verwendung von elektrisch leitfähigen Kohlenstoffasern deren hohe elektrische Leitfähigkeit bei der Einlagerung der positiven Ionen des Elektrolyten nicht gravierend ändert. Dadurch kann die Kohlenstoffaser als elektrochemisch aktives Material und als effektiver Ableiter der Anode verwendet werden, womit sich flächenhafte metallische Ableiter erübrigen und eine erhebliche Gewichtseinsparung erzielt werden kann. Die elektrische Leitfähigkeit der C-Fasern liegt vorzugsweise im Bereich von 100-2000 $scm^{-1}$, kann aber auch höher sein.

Als aktives Kathodenmaterial eignen sich prinzipiell alle elektrochemisch reversibel oxidierbaren Polymeren. Solche Polymeren und Verfahren zu deren Herstellung sind an sich bekannt und in der Literatur beschrieben. Nur stellvertretend seien hier z.B. Polyacetylene, Pyrrol-, Thiophen-und Anilinpolymere genannt, wobei die beiden letztgenannten Polymerarten bevorzugt werden.

Zu den Polymeren des Pyrrols zählen z.B. ganz allgemein Homo-und Copolymere von Pyrrol und substituierten Pyrrolen sowie Copolymere dieser Monomere mit anderen Comonomeren. Nur beispielhaft seien als Monomere Pyrrol und an den C-Atomen halogen-oder alkylsubstituierte Pyrrole sowie als Comonomere Cyclopentadien, Acylen, Imidazol, Thiazol, Furan, Thiophen und Pyrazin genannt, wie sie z.B. in der EP-A 36118 beschrieben werden. Vorzugsweise enthalten derartige Pyrrolpolymere 50 bis 99 Gew.% Pyrrol und 1 bis 50 Gew.% substituierte Pyrrole und/oder andere Comonomere.

Die zweite Gruppe von Polymeren, die als aktives Material für die Kathode bevorzugt wird, sind die Polymere des Anilins, d.h. Homopolymere von Anilin oder substituierten Anilinderivaten oder Copolymere dieser Monomere mit anderen Monomeren. Derartige Polymere, ihre Eigenschaften und Verfahren zur Herstellung sind an sich bekannt. Nähere Einzelheiten sind z.B. E.M. Genies et al, Mol. Cryst. Liq. Cryst. - (1985), Vol. 121, Seiten 181-186 und A.G. McDiarmid et al, l.c., Vol. 121, Seiten 173-180 zu entnehmen.

Die elektrochemisch reversibel oxidierbaren Polymeren können in dotierter oder undotierter Form, d.h. mit oder ohne eingelagertem Gegenion beim Aufbau der Zelle eingesetzt werden. Im letzteren Fall erfolgt die Einlagerung des Gegenions beim ersten Aufladevorgang.

Als aktives Anodenmaterial werden in den erfindungsgemäßen wiederaufladbaren elektrochemischen Zellen Kohlenstoffasern eingesetzt. Solche Fasern und Verfahren zu deren Herstellung sind an sich bekannt und die Fasern sind im Handel erhältlich. Die Faserstärke liegt im allgemeinen im Bereich von 1 bis 50 µm, vorzugsweise von 5 bis 15 µm; die Länge der verwendeten Fasern ist an sich nicht kritisch und kann entsprechend den Anforderungen der Praxis gewählt werden. Vorzugsweise werden elektrisch leitfähige Kohlenstoffasern mit einer elektrischen Leitfähigkeit im Bereich von 100 bis 1.000 S/cm, besonders bevorzugt von 200 bis 800 S/cm eingesetzt.

Die Kohlenstoffasern können sowohl in neutraler als auch in reduzierter, d.h. mit Kation dotierter Form eingesetzt werden.

Die Reduktion kann chemisch oder elektrochemisch erfolgen. Eine Möglichkeit ist z.B. die chemische Reduktion mit stark reduzierenden Kobaltaten, wie sie von Klein et al (Angew. Chem. Int. Ed. 19 (1980), 491) beschrieben wird.

Die elektrochemische Reduktion erfolgt am einfachsten dadurch, daß man C-Fasern in einer Zelle als Kathode schaltet, wobei dann das Kation des Elektrolyten in die C-Fasern eingebaut wird.

Das Salze von Alkalimetallen, insbesondere $LiClO_4$, als Elektrolyt-Leitsalze bevorzugt werden, werden besonders vorteilhaft Alkalimetall-dotierte C-Fasern eingesetzt.

Es ist jedoch nicht unbedingt erforderlich, daß die Kohlenstoffasern in reduzierter Form, d.h. mit eingelagertem Kation vorliegen. Vielmehr sind auch neutrale Kohlenstoffasern geeignet, in die die entsprechenden Kationen dann beim ersten Beladen der Zelle auf elektrochemischem Weg eingelagert werden.

Da sich die elektrische Leitfähigkeit der Kohlenstoffasern in Abhängigkeit vom Beladungszustand nicht wesentlich ändert, können die Fasern selbst auch als Ableiter für die Anode fungieren. Damit erübrigt sich die Verwendung eines metallischen Ableiters, was infolge der damit verbundenen Gewichtsersparnis besonders bei Sekundärelementen aus den erfindungsgemäßen Zellen von Vorteil ist. Wo dies gewünscht wird, kann jedoch selbstverständlich auch ein metallischer Ableiter eingesetzt werden.

Es wurde auch festgestellt, daß die Beladbarkeit der Kohlenstoffasern mit steigender Kristallinität abnimmt, so daß zum Erreichen einer hohen Energiedichte Fasern mit möglichst niedriger Kristallinität bevorzugt werden.

Der Aufbau des aktiven Anodenmaterials unterliegt an sich keiner besonderen Beschränkung, es können z.B. Kohlenstoffasern auf einem Träger oder auch Gewebe aus Kohlenstoffasern eingesetzt werden.

Der in den erfindungsgemäßen elektrochemischen Zellen eingesetzte Elektrolyt unterliegt an sich keiner besonderen Beschränkung; es werden jedoch Lösungen oder Suspensionen von ionischen oder ionisierbaren Verbindungen als Leitsalz in einem gegenüber den Elektrodenmaterialien indifferenten Lösungsmittel bevorzugt. Als Leitsalze sind beispielsweise Alkalimetall-, Erdalkalimetall-, Ammonium-oder Phosphoniumsalze der Perchlorsäure, Hexafluoroarsensäure, Hexafluoroantimonsäure, Hexafluorophosphorsäure, Benzolsulfonsäure oder Toluolsulfonsäure zu nennen. Besonders bevorzugt wird $LiClO_4$ als Leitsalz eingesetzt. Weitere Beispiele für geeignete Leitsalze sind z.B. der DE-A-34 28 843, dort insbesondere der Seite 8 zu entnehmen.

Es ist auch möglich und häufig vorteilhaft, Mischungen mehrerer Leitsalze zu verwenden.

Eine weitere Klasse von als Leitsalz geeigneten Verbindungen wird durch die allgemeine Formel

$$[XAX]^+Y^-$$

charakterisiert, wobei

X eine monomere organische, mindestens ein Heteroatom enthaltende C-H acide Verbindung oder ein durch oxidative dehydrierende Dimerisierung erhaltenes Dimeres hiervon,

A ein Wasserstoff-, Alkalimetall-oder Ammoniumkation, und

Y ein geeignetes Anion, vorzugsweise aus der Gruppe $I_3^-$, $Br^-$, $ClO_4^-$, $NO_3^-$ oder $PF_6^-$, ist.

Bei diesen Elektrolytsalzen handelt es sich im Gegensatz zu den üblichen Lösungen von Salzen des Typs $A^+Y^-$ in Lösungsmitteln des Typs X um feste leitfähige Substanzen.

Als Beispiele für X seien hier nur stellvertretend lineare oder cyclische Säureamide, Amine, Ester, Ketone oder Nitrile genannt. Nähere Einzelheiten hierzu und Verfahren zur Herstellung derartiger Elektrolytsalze sind in der DE-A 33 28 636 beschrieben.

Als Beispiele seien hier

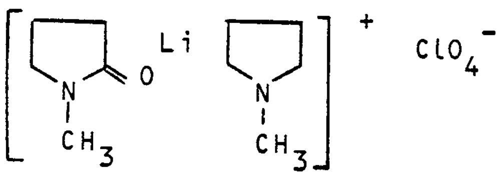

und

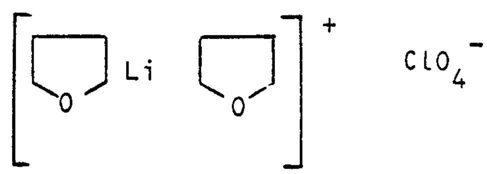

genannt.

Als Elektrolytlösungsmittel werden vorzugsweise gegenüber den Elektrodenmaterialien inerte Lösungsmittel eingesetzt. Als vorteilhaft haben sich hier z.B. Dimethoxiethan, Diethylenglykoldimethylether, Tetrahydrofuran und dessen Derivate, Propylencarbonat, gamma-Butyrolacton und dessen Derivate, N-Methylpyrrolidon, Acetonitril, Dimethylformamid, Dimethyl sulfoxid, Sulfolan und dessen Derivate, Ethylensulfit und Dimethylsulfit herausgestellt, wie sie z.B. in der EP-A 36118 beschrieben sind. Propylencarbonat ist ein besonders bevorzugtes Elektrolytlösungsmittel.

Eine weitere Gruppe geeigneter Elektrolytlösungsmittel sind unvernetzte Dimere oder Oligomere heterocyclischer Verbindungen wie Tetrahydrofuran, Dioxolan, Dioxan, Pyrrolidin, Pyrrolidon, Tetrahydropyran, Morpholin, Piperidin, Piperazin, Indol, Imidazol und Thiophen, wie sie in der DE-A 34 28 848 näher beschrieben sind.

Selbstverständlich sind auch Mischungen der vorgenannten Elektrolytlösungsmittel verwendbar, häufig bringt die Verwendung solcher Mischungen auch Vorteile mit sich.

Wie bereits erwähnt, sollte das verwendete Elektrolytlösungsmittel gegenüber den verwendeten Elektrodenmaterialien indifferent und im Spannungsbereich, in dem die Zelle bzw. Batterie betrieben wird, gegen chemische Zersetzung stabil sein. Falls eine Zersetzung des Lösungsmittels auftritt, so wird zum einen die Lebensdauer der Zelle durch Lösungsmittelverbrauch herabgesetzt und zum anderen sind Nebenreaktionen der Zersetzungsprodukte des Lösungsmittels mit den Elektrodenmaterialien möglich, die ebenfalls zum Versagen der Zelle führen können.

Die Konzentration der Leitsalze in den Elektrolytlösungsmitteln ist an sich nicht kritisch, vorzugsweise liegt sie jedoch im Bereich von 0,01 bis 2 mol Leitsalz pro Liter Elektrolytlösungsmittel.

Als Separatoren zwischen Kathode und Anode sind die üblicherweise für diesen Zweck eingesetzten Materialien geeignet, weshalb sich hier nähere Angaben erübrigen. Nur beispielhaft seien hier Vliese aus Polyolefinen, z.B. Polypropylen, genannt.

Eine weitere Ausführungsform der Erfindung betrifft Sekundärelemente aus mehreren wiederaufladbaren elektrochemischen Zellen. Solche Sekundärelemente können auf an sich bekannte Weise durch Verbindung mehrerer elektrochemischer Zellen hergestellt werden und liefern Akkumulatoren, deren Energiedichte und Cyclisierbarkeit ausgezeichnet sind. Mehrere hundert Be-und Entladungsvorgänge sind möglich, ohne daß eine merkliche Verringerung der Beladungsdichte zu beobachten ist. Bei der Verwendung elektrisch leitfähiger Kohlenstoffasern als Anodenmaterial, womit sich metallische Ableiter erübrigen, wird somit bei beträchtlicher Gewichtsersparnis eine mit herkömmlichen Akkumulatoren vergleichbare Energie erreicht.

## Beispiel 1

90 mg Kohlenstoffasern mit einer Faserstärke von 8 µm wurden elektrochemisch reduziert, wobei $Li^0$ eingelagert wurde. Das auf diese Weise präparierte Material wurde als aktives Anodenmaterial mit Polypyrrolperchlorat als aktivem Kathodenmaterial zu einer elektrochemischen Zelle zusammengebaut. Als Elektrolyt diente eine 0,5 molare Lösung von $LiClO_4$ in Propylencarbonat. Als Separator wurde ein dünnes Vlies aus Polypropylen verwendet.

Bei Verbindung beider Elektroden über einen metallischen Leiter floß ein Strom. $ClO_4^-$ trat aus dem Polypyrrol und $Li^{0}$ aus den Kohlenstoffasern in den Elektrolyten über. Durch Umpolung und Anschluß an eine Gleichstromquelle konnte der Vorgang umgekehrt und die Zelle wieder aufgeladen werden. Dabei lagerten sich entsprechend $ClO_4^-$ und $Li^{0}$ in ihre entsprechenden Wirtsgitter, d.h. in das Polypyrrol bzw. die Kohlenstoffasern ein.

Über 300 gemessenen Cyclen war nur eine geringe Abnahme der Beladungshöhe festzustellen. Cyclisiert wurde potentiostatisch zwischen 1,7 und 4 V.

Beispiel 2

In einer anderen Zelle wurden neutrales Polypyrrol und Kohlenstoffasern als aktives Kathoden-bzw. Anodenmaterial eingesetzt. Als Elektrolyt wurde dieselbe Lösung wie in Beispiel 1 verwendet. Durch die Verbindung der Polypyrrolelektrode mit dem positiven und der Kohlenstoffaserelektrode mit dem negativen Pol einer Gleichstromquelle wurde die Zelle aufgeladen. Die Spannung in aufgeladenem Zustand betrug 4 V. Bei potentiostatischer Entladung mit 1,7 V als untere Spannungsgrenze ließen sich 120 Ah/kg, bezogen auf die eingesetzten Kohlenstoffasern, entladen. Die Cyclisierbarkeit der Zelle entsprach der der Zelle in Beispiel 1.

## Ansprüche

1. Elektrochemische Zelle mit einer Anode, einer Kathode und einem Elektrolyten, dadurch gekennzeichnet, daß die Anode als aktives Elektrodenmaterial Kohlenstoffasern enthält.
2. Elektrochemische Zelle nach Anspruch 1, dadurch gekennzeichnet, daß die Zelle wiederaufladbar ist.
3. Elektrochemische Zelle nach Anspruch 1 oder 2, dadurch gekennzeichnet, daß die Kohlenstoffasern mit Alkalimetallen dotiert sind.
4. Elektrochemische Zelle nach den Ansprüchen 1 bis 3, dadurch gekennzeichnet, daß die Kohlenstoffasern eine elektrische Leitfähigkeit von 100-2000 $Scm^{-1}$ aufweisen.
5. Elektrochemische Zelle nach den Ansprüchen 1 bis 4, dadurch gekennzeichnet, daß die Kathode ein elektrisch leitfähiges reversibel elektrochemisch oxidierbares Polymer enthält.
6. Elektrochemische Zelle nach Anspruch 5, dadurch gekennzeichnet, daß das elektrisch leitfähige Polymer ein Pyrrol-oder Anilinpolymer ist.
7. Elektrochemische Zelle nach den Ansprüchen 1 bis 6, dadurch gekennzeichnet, daß das Elektrolytlösungsmittel ein nichtwäßriges Lösungsmittel ist.
8. Sekundärelemente aus elektrochemischen Zellen gemäß den Ansprüchen 2 bis 7.